# EUROPÄISCHE PATENTANMELDUNG

(11) **EP 1 243 792 A2**
(43) Veröffentlichungstag der Anmeldung: **25.09.2002**
(21) Anmeldenummer: 02004797.3
(22) Anmeldetag: 02.03.2002
(51) Int. Cl.: F03G 7/06

(54) **Stellelement, insbesondere als Teil eines Stellantriebs für eine Bildaufnahmeeinrichtung**

(30) Priorität: 24.03.2001 DE 10114564
(71) Anmelder: Conti Temic Microelectronic GmbH, 90411 Nürnberg (DE)
(72) Erfinder: Bärenweiler, Josef, 90513 Zirndorf (DE); Fendt, Günter, 86529 Schrobenhausen (DE); Riedel, Helmut, Dr., 82256 Fürstenfeldbruck (DE)
(74) Vertreter: Kolb, Georg

(57) **Zusammenfassung**

**2.1.** Bekannte Stellantriebe geben während des Einstellvorgangs Geräusche von sich, was beispielsweise innerhalb eines Fahrzeugs von den Insassen als störend empfunden wird, insbesondere deshalb, weil Abgleich- oder Kalibrierungsvorgänge meistens kurz vor oder beim Belegen eines Sitzes, also bei einem vergleichsweise niedrigem Geräuschniveau noch vor dem Starten des Motors und vor Fahrbeginn, vorgenommen werden.
**2.2.** Stellelement, insbesondere als Teil eines Stellantriebs für eine Bildaufnahmeeinrichtung mit einem Bilderfassungssystem, dadurch gekennzeichnet, dass sich die Ausrichtung der Bildaufnahmeeinrichtung auf ein Objekt verändern lässt, dass das Stellelement aus zwei Memory-Elementen mit Einweg-Effekt, aus zwei Thermobimetall-Teilen oder aus einem Memory-Element und einem Thermobimetall-Teil besteht, wobei jedes Memory-Element bzw. Thermobimetall-Teil einzeln beheizbar ist, und dass die Auslenkung der Memorymetall- oder Thermobimetail-Teile beim Beheizen entgegen gesetzt gerichtet ist.
2.3. Die Erfindung eignet sich insbesondere als Teil eines Stellantriebs für die Feinjustage einer Bildaufnahmeeinrichtung, die in Fahrzeugen beispielsweise zur Sitzbelegungserkennung eingesetzt wird.

## Beschreibung

Die Erfindung betrifft ein Stellelement, insbesondere als Teil eines Stellantriebs für eine Bildaufnahmeeinrichtung, nach dem Oberbegriff der Patentansprüche 1, 4 oder 7.

In der Automobilindustrie fordert der Markt zunehmend verbesserte Insassenschutzsysteme, bei denen beispielsweise ein Prallkissen (Airbag) nur dann ausgelöst wird, wenn ein Fahrzeugsitz mit einer Person ab einer bestimmten Größe und ab einem bestimmten Gewicht besetzt ist und der Insasse eine korrekte Sitzposition einnimmt. Zudem wird gefordert, den Füllgrad eines Prallkissens (Airbag) von der Größe und vom Gewicht oder auch von der Schwere eines Aufpralls abhängig zu machen. Weiterhin darf ein Prallkissen (Airbag) nicht auslösen, wenn zum Beispiel auf dem Beifahrersitz ein Kindersitz mit einem Kleinkind darin befestigt ist, da dadurch das Leben des Kindes bedroht sein kann.

Mit herkömmlichen Systemen kann die Belegung eines Fahrzeugsitzes nicht eindeutig erkannt werden; beispielsweise kann eine Sitzmatte nicht eindeutig zwischen einer leichten Person und einem Kind in einem Kindersitz unterscheiden, obwohl dieser Unterschied für die Auslösung von Insassenschutzsystemen relevant sein kann. Daher werden zur Sitzbelegungserkennung mehr und mehr Bildaufnahmeeinrichtungen mit nachgeschalteten Bildverarbeitungssystemen verwendet (wie beispielsweise in DE 197 57 595 A1 beschrieben), verstärkt auch Stereosysteme. Die dabei verwendeten Bildaufnahmeeinrichtungen müssen allerdings sehr exakt justiert sein und in bestimmten Zeitabständen zur Kalibrierung oder zum Abgleich beispielsweise auf bestimmte Fix- oder Referenzpunkte ausgerichtet werden, wofür ein Stellantrieb notwendig ist.

Ein Stellantrieb für Bildaufnahmeeinrichtungen nach dem Stand der Technik ist beispielsweise aus der europäischen Patentschrift EP 0 485 302 B1 bekannt. Bei dem in dieser Schrift genannten Stellantrieb wird ein Getriebe zur Ausschnittsveränderung (Zoom) oder zur Scharfeinstellung durch einen elektrischen Motor, insbesondere durch einen Schrittmotor angetrieben.

Derartige Stellantriebe weisen jedoch den Nachteil auf, dass sie während des Einstellvorgangs Geräusche von sich geben, was innerhalb eines Fahrzeugs von den Insassen als störend empfunden wird, insbesondere deshalb, weil Abgleich- oder Kalibrierungsvorgänge in der Regel kurz vor oder beim Belegen eines Sitzes, also bei einem vergleichsweise niedrigem Geräuschniveau noch vor dem Starten des Motors und vor Fahrbeginn, vorgenommen werden.

Formgedächtnislegierungen, sogenannte Memorymetalle, sind bekannt und werden, wie beispielsweise in der DE 39 18 499 A1 gezeigt, in Verbindung mit Sicherheitsventilen eingesetzt, um ein Absperrelement von einer elastischen Schlauchleitungen wegzuziehen und damit den Durchfluss von Gasen oder Flüssigkeiten durch die Schlauchverbindung freizugeben.

Der Erfindung liegt die Aufgabe zugrunde, ein Stellelement für einen Stellantrieb nach dem Oberbegriff der Patentansprüche 1, 4 oder 7 so zu gestalten, dass keine störenden Geräusche vom Stellantrieb ausgehen.

Gelöst wird diese Aufgabe durch eine Anordnung mit den in den Patentansprüchen 1, 4 oder 7 angegebenen Merkmalen.

Der Gegenstand des Anspruchs 1, 4 oder 7 weist die Vorteile auf, dass bei Abgleich- oder Kalibrierungsvorgängen keine störenden und irritierenden Geräusche auftreten. Ein weiterer Vorteil liegt darin, dass im Vergleich zu elektrischen Motoren, insbesondere Schrittmotoren und deren Ansteuerelektronik, keine elektromagnetische Störstrahlung erzeugt wird und daher mit Aufwand und Kosten verbundene Abschirmmaßnahmen entfallen können.

Die Erfindung eignet sich insbesondere als Teil eines Stellantriebs für eine Bildaufnahmeeinrichtung, die in Fahrzeugen beispielsweise zur Sitzbelegungserkennung eingesetzt wird.

Vorteilhafte Ausgestaltungen des Gegenstands nach Anspruch 1, 4 oder 7 sind in den jeweiligen Unteransprüchen angegeben.

Die Erfindung wird nun anhand eines Ausführungsbeispiels unter Zuhilfenahme der Zeichnung erläutert.

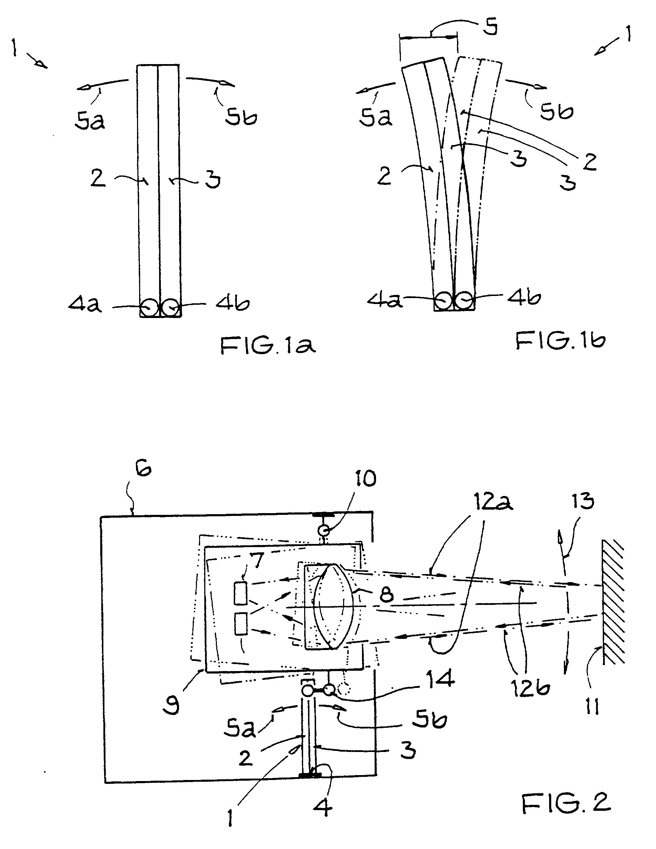

Es zeigen
- Fig. 1 a:: einen erfindungsgemäßen Aktor als Stellelement für einen Stellantrieb,
- Fig. 1 b:: den Aktor nach Fig. 1 a in zwei ausgelenkten Stellungen,
- Fig. 2:: ein erstes Anwendungsbeispiel für den erfindungsgemäßen Aktor eines Stellantriebs für eine Bildaufnahmeeinrichtung und
- Fig. 3:: ein zweites Anwendungsbeispiel für den erfindungsgemäßen Aktor eines Stellantriebs für eine Bildaufnahmeeinrichtung.

**Fig. 1a** und **Fig. 1b** zeigen einen erfindungsgemäßen Aktor (Stellelement) **1** als Teil eines Stellantriebs. Der Aktor **1** besteht aus einem ersten Memory-Element **2** und einem zweiten Memory-Element **3.** Beide Memory-Elemente **2** und **3** sind auf geeignete Weise mit einander verbunden und können entweder aus einer bekannten Nickel-Titan-Kupfer-Legierung zusammen gesetzt sein, wie sie beispielsweise in der deutschen Offenlegungsschrift DE 38 02 919 A1 beschrieben ist, oder aus einer anderen geeigneten Legierung, zum Beispiel einer Nickel-Titan-Legierung. Bei beiden Memory-Elementen **2** und **3** handelt es sich um sogenannte Memorymetalle mit Einwegeffekt, was bedeutet, dass eine nach einer Erwärmung erfolgte Abkühlung keine weitere Formänderung bewirkt. Dies hat den Vorteil, dass die Wärmezufuhr nicht dauerhaft, sondern nur bei einer gewünschten Formänderung erfolgen muss.

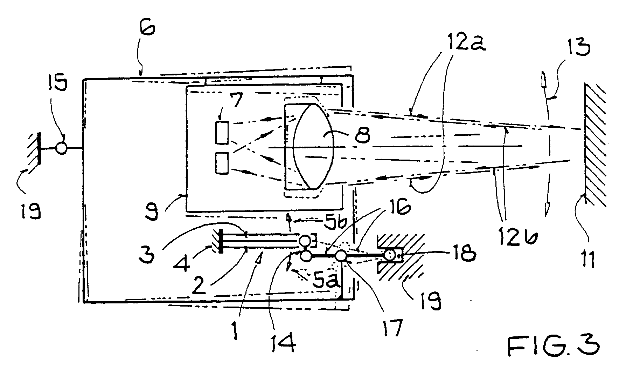

Jedes Memory-Element **2** bzw. **3** ist an einem Ende auf geeignete Art und Weise eingespannt oder fixiert, beispielsweise mittels einer Niet- oder Schraubverbindung **4a** bzw. **4b.** Statt durch zwei Niet- oder Schraubverbindungen **4a** bzw. **4b** können die Memory-Elemente **2** und **3** auch durch eine einzige Niet- oder Schraubverbindung **4** (Fig. 2, 3) fixiert sein. Jedes Memory-Element **2** bzw. **3** ist einzeln durch ein (nicht dargestelltes) Heizelement beheizbar.

Bei Erwärmung auf bekannte Art und Weise, beispielsweise durch ein Peltierelement, durch ein vergleichbares Heizelement mit ähnlichen Eigenschaften, durch den ohmschen Widerstand der Memory-Elemente **2** und **3,** durch einen PTC-Widerstand oder eine andere Heizstromquelle oder besonders vorteilhaft durch Mikrowellen oder Infrarot, wie in der DE 38 02 919 A1 beschrieben und hier nicht dargestellt, verformt sich das jeweils beheizte Memory-Element **2** bzw. **3** und zieht das nicht beheizte Memory-Element **2** bzw. **3** mit sich, wodurch das nicht fixierte Ende des Memorymetall-Aktors **1** zur einen oder anderen Seite hin ausgelenkt wird, wie in Fig. 1b dargestellt. Erfindungsgemäß sind die Memory-Elemente **2** und **3** derart angeordnet, dass ihre Auslenkung beim Beheizen entgegen gesetzt gerichtet ist.

Dadurch wurde ein Aktor **1** geschaffen, dessen nicht fixiertes Ende sich bei Erwärmung des Memory-Elements **2** in Richtung eines Pfeils **5a** und bei Erwärmung des Memory-Elements **3** in Richtung eines Pfeils **5b** auslenkt und somit einen Dynamikbereich aufweist, der der Länge eines Pfeils **5** entspricht.

In manchen Fällen kann es aufgrund bestimmter Anforderungen an die Temperatur-Ausbiegungs-Charakteristik notwendig sein, den Aktor **1** anstatt aus den beiden Memory-Elemente **2** und **3** aus zwei einzeln beheizbaren Thermobimetall-Teilen aufzubauen. In Folge dessen müsste das jeweils auszulenkende Thermobimetall-Teil ständig beheizt werden, oder der Stellantrieb dahingehend ausgelegt werden, dass eine bestimmte Einstellung erhalten bleibt und nur bei neuer Einstellung beheizt werden muss.

Bei anderen Anwendungsfällen kann es weiterhin vorteilhaft sein, den Aktor **1** anstatt aus den zwei Memory-Elementen **2** und **3** oder aus zwei Thermobimetall-Teilen aus einem Memory-Element **2** mit Einwegeffekt und aus einem Thermobimetall-Teil **3** aufzubauen, wobei das Memory-Element **2** und das Thermobimetall-Teil **3** ebenfalls einzeln beheizbar sind. Eine solche Ausgestaltung des Aktors **1** bietet sich an, wenn beispielsweise eine Auslenkung des Aktors **1** in der einen Richtung möglichst schnell und eine Auslenkung in die andere Richtung möglichst genau sein soll. Mit einem derartig aufgebauten Aktor **1** wäre es auch möglich, eine grobe, aber dafür schnelle Auslenkung mittels des Memory-Elements **2** in einer Richtung auszuführen und die nicht so schnelle Feineinstellung mit dem Thermobimetall-Teil **3** vorzunehmen.

Da jedoch bei den meisten Anwendungen der Einsatz eines aus den zwei Memory-Elementen **2** und **3** mit Einwegeffekt aufgebauten Aktors **1** als Teil eines Stellantriebs als wahrscheinlich gilt, soll im weiteren lediglich auf diese Ausgestaltung des Aktors **1** eingegangen werden.

**Fig. 2** zeigt eine Bildaufnahmeeinrichtung **6** mit einem optischen Sensor **7** und einer Optik **8**, wobei der optische Sensor **7** und die Optik **8** wesentliche Teile eines Bilderfassungssystems **9** darstellen, das in einem Drehpunkt **10** drehbar gelagert ist. Als Bilderfassungssystem **9** wird ein passives Bilderfassungssystem wie CCD-Kamera, CMOS-Kamera, Infrarot-Kamera oder Wärmebildkamera, vorteilhaft jedoch ein aktives Bilderfassungssystem mit Sende- und Empfangsteil eingesetzt. Beim optischen Sensor **7** handelt es sich im Falle des aktiven Bilderfassungssystems vorzugsweise um einen aus der WO 99/60629 A1 bekannten PMD-Sensor (photonic mixer device), der ein Sendeteil **7.1** und ein Empfangsteil **7.2** aufweist und mit dem modulierte Strahlen **12a** elektromagnetischer bzw. optischer Natur mittels der Optik **8** auf ein Objekt **11** gerichtet werden.

Bei der Optik **8** handelt es sich in der Regel um ein Objektiv; beim Objekt **11** handelt es sich beispielsweise um einen Fahrzeuginsassen auf einem Fahrzeugsitz. Vom Objekt **11** reflektierte Strahlen **12b** gelangen wiederum durch das Objektiv **8** auf den PMD-Sensor **7.** Statt des bevorzugt eingesetzten PMD-Sensors **7** als Teil des aktiven Bilderfassungssystems **9** können auch andere geeignete Bilderfassungssysteme, insbesondere aktive Bilderfassungssysteme, eingesetzt werden.

Durch Verschwenken des Bilderfassungssystems **9** um den Drehpunkt **10** können die Strahlen **12a** bzw. **12b** in Richtung eines Pfeils **13** verschoben werden, um zum Beispiel das Bilderfassungssystem **9** mit Hilfe von Referenz- oder Fixpunkten zu kalibrieren oder zu justieren. Zum Verschwenken um den Drehpunkt **10** ist das Bilderfassungssystem **9** über ein Gelenk oder Getriebe **14** als der eine Teil eines Stellantriebs mit dem frei beweglichen Ende des Memorymetall-Aktors **1** als dem anderen Teil des Stellantriebs verbunden; das andere Ende des Memorymetall-Aktors **1** ist mittels der Befestigung **4** in geeigneter Weise fixiert, beispielsweise durch Verbinden mit dem Gehäuse der Bildaufnahmeeinrichtung **6**.

Wird ein Memory-Element **2, 3** des Memorymetall-Aktors **1** auf geeignete und bereits beschriebene Art erwärmt, so schwenkt das nicht fixierte Ende des Memorymetall-Aktors **1** in Richtung des Pfeils **5a** oder **5b** aus. Durch die zugeführte Wärme kann die Größe der Verschwenkung bzw. der zurück gelegte Weg des nicht fixierten Endes des Memorymetall-Aktors **1** genau bestimmt werden. Die Verschwenkung bzw. der zurück gelegte Weg des nicht fixierten Endes des Memorymetall-Aktors **1** wird über das Gelenk oder Getriebe **14** übertragen und somit das Bilderfassungssystem **9** um den Drehpunkt **10** ausgelenkt. Durch den aus Memorymetall-Aktor **1** und Gelenk oder Getriebe **14** bestehenden Stellantrieb wird letztendlich die Abtastbewegung des Bilderfassungssystems **9** in Richtung des Pfeils **13** gezielt verändert.

Der übersichtlichen Darstellung wegen beschränkt sich dieses Anwendungsbeispiel auf die eindimensionale Veränderung der Abtastbewegung des Bilderfassungssystems **9.** Es ist dem Fachmann jedoch ohne weiteres möglich, das gezeigte Prinzip auf eine zwei- oder dreidimensionale Veränderung der Abtastbewegung des Bilderfassungssystems **9** zu erweitern.

In **Fig. 3** ist ein zweites Anwendungsbeispiel für den erfindungsgemäßen Memorymetall-Aktor **1** in einem Stellantrieb für eine Bildaufnahmeeinrichtung **6** dargestellt. Die Bildaufnahmeeinrichtung **6** setzt sich wiederum im wesentlichen aus einem optischen Sensor **7**, vorzugsweise einem PMD-Sensor, und einer Optik **8**, in der Regel ein Objektiv zusammen. PMD-Sensor **7** und Objektiv **8** sind wesentliche Teile eines vorteilhaft aktiven Bilderfassungssystems **9**, das Strahlen **12a** gegen ein Objekt **11** sendet und vom Objekt **11** reflektierte Strahlen **12b** empfängt.

Im Gegensatz zum ersten Anwendungsbeispiel der Fig. 2 wird nicht nur das Bilderfassungssystem **9** verschwenkt, um die Abtastbewegung des Bilderfassungssystems **9** in Richtung des Pfeils **13** zu verändern, sondern die gesamte Bildaufnahmeeinrichtung **6**, was aus praktischen Gründen vorteilhafter sein kann. Die Bildaufnahmeeinrichtung **6** ist zum Verschwenken in einem Drehpunkt **15** drehbar gelagert. Der Memorymetall-Aktor **1** ist mit einem Ende durch eine bereits beschriebene Verbindung **4** in geeigneter Weise fixiert, während das nicht fixierte Ende des Memorymetall-Aktors **1** durch Erwärmen auf bereits beschriebene Weise in Richtung der Pfeile **5a** bzw. **5b** ausgelenkt werden kann.

Mittels des Gelenks oder Getriebes **14** wird diese Auslenkung auf eine Seite eines zweiseitigen Hebels **16** übertragen, der in einem Drehpunkt **17** drehbar gelagert ist. Die andere Seite des zweiseitigen Hebels **16** ist auf geeignete Weise beispielsweise in einer parallelen Ausnehmung (Nut) **18** gelagert, wobei die Nut **18** zum Beispiel in eine Halterung **19** für die Bildaufnahmeeinrichtung **6** eingearbeitet ist. Durch Beheizen entweder des Memory-Elements **2** oder **3** wird die daraus folgende Auslenkung des nicht fixierten Endes des Memorymetall-Aktors **1** über den Hebel **16** auf die gesamte Bildaufnahmeeinrichtung **6** übertragen, wodurch sich die Abtastbewegung des Bilderfassungssystems **9** in Richtung des Pfeils **13** verändert.

Die Erfindung zeigt ein geräuschloses und kostengünstiges Stellelement (Aktor) aus einem Memorymetall, das als Teil eines Stellantriebs, beispielsweise zur Feinjustage der Ausrichtung einer Bildaufnahmeeinrichtungen für die Sitzbelegungserkennung in einem Fahrzeug, geeignet ist.

## Patentansprüche

1. Stellelement (1), insbesondere als Teil eines Stellantriebs für eine Bildaufnahmeeinrichtung (6) mit einem Bilderfassungssystem (9), **dadurch gekennzeichnet, dass** sich die Ausrichtung der Bildaufnahmeeinrichtung (6) auf ein Objekt (11) verändern lässt, dass das Stellelement (1) aus zwei Memory-Elementen (2, 3) mit Einwegeffekt besteht, die einzeln beheizbar sind und dass die Auslenkung der Memory-Elemente (2, 3) beim Beheizen entgegen gesetzt gerichtet ist.

2. Stellelement (1) nach Anspruch 1, **dadurch gekennzeichnet, dass** die beiden Memory-Elemente (2, 3) einseitig eingespannt sind.

3. Stellelement (1) nach Anspruch 1 oder 2, **dadurch gekennzeichnet, dass** die beiden Memory-Elemente (2, 3) mit einander verbundenen sind.

4. Stellelement (1), insbesondere als Teil eines Stellantriebs für eine Bildaufnahmeeinrichtung (6) mit einem Bilderfassungssystem (9), **dadurch gekennzeichnet, dass** sich die Ausrichtung der Bildaufnahmeeinrichtung (6) auf ein Objekt (11) verändern lässt, dass das Stellelement (1) aus zwei Thermobimetall-Teilen (2, 3) besteht, die einzeln beheizbar sind und dass die Auslenkung der Thermobimetall-Teile (2, 3) beim Beheizen entgegen gesetzt gerichtet ist.

5. Stellelement (1) nach Anspruch 4, **dadurch gekennzeichnet, dass** die beiden Thermobimetall-Teile (2, 3) einseitig eingespannt sind.

6. Stellelement (1) nach Anspruch 4 oder 5, **dadurch gekennzeichnet, dass** die beiden Thermobimetall-Teile (2, 3) mit einander verbundenen sind.

7. Stellelement (1), insbesondere als Teil eines Stellantriebs für eine Bildaufnahmeeinrichtung (6) mit einem Bilderfassungssystem (9), **dadurch gekennzeichnet, dass** sich die Ausrichtung der Bildaufnahmeeinrichtung (6) auf ein Objekt (11) verändern lässt, dass das Stellelement (1) aus einem Memory-Element (2) und einem Thermobimetall-Teil (3) besteht, wobei das Memory-Element (2) und das Thermobimetall-Teil (3) einzeln beheizbar sind, und dass die Auslenkung des Memorymetall-Teils (2) und des Thermobimetall-Teils (3) beim Beheizen entgegen gesetzt gerichtet ist.

8. Stellelement (1) nach Anspruch 7, **dadurch gekennzeichnet, dass** das Memory-Element (2) und das Thermobimetall-Teil (3) einseitig eingespannt sind.

9. Stellelement (1) nach Anspruch 7 oder 8, **dadurch gekennzeichnet, dass** das Memory-Element (2) und das Thermobimetall-Teil (3) mit einander verbundenen sind.

10. Stellelement (1) nach Anspruch 1, 4 oder 7, **dadurch gekennzeichnet, dass** das Stellelement (1) die Ausrichtung der Bildaufnahmeeinrichtung (6) durch Verschwenken des Bilderfassungssystems (9) verändert.

11. Stellelement (1) nach Anspruch 1, 4 oder 7, **dadurch gekennzeichnet, dass** das Stellelement (1) die Ausrichtung der Bildaufnahmeeinrichtung (6) durch Verschwenken der gesamten Bildaufnahmeeinrichtung (6) verändert.

12. Stellelement (1) nach einem der Ansprüche 1 bis 11, **dadurch gekennzeichnet, dass** zwischen Stellelement (1) und Bilderfassungssystem (9) ein Gelenk oder Getriebe (14) angeordnet ist.

13. Stellelement (1) nach einem der Ansprüche 1 bis 12, **dadurch gekennzeichnet, dass** zur Kalibrierung oder Justierung der Bildaufnahmeeinrichtung (6) Referenz- oder Fixpunkte vorhanden sind.

14. Verwendung des Stellelements (1) nach einem der Ansprüche 1 bis 13 als Teil eines Stellantriebs für eine aktive Bildaufnahmeeinrichtung (6) wie PMD-Sensor.

15. Verwendung des Stellelements (1) nach einem der Ansprüche 1 bis 13 als Teil eines Stellantriebs für eine passive Bildaufnahmeeinrichtung (6) wie CCD-Kamera, CMOS-Kamera, Infrarot-Kamera oder Wärmebildkamera.
